(19) Europäisches Patentamt
European Patent Office
Office européen des brevets

(11) **EP 4 715 358 A1**

(12) **EUROPEAN PATENT APPLICATION**

(43) Date of publication:
**25.03.2026 Bulletin 2026/13**

(21) Application number: **25200112.8**

(22) Date of filing: **04.09.2025**

(51) International Patent Classification (IPC):
**G01M 3/04** (2006.01)     **G01M 3/38** (2006.01)
**G02B 5/04** (2006.01)     **H01M 10/42** (2006.01)
**H05B 3/84** (2006.01)

(52) Cooperative Patent Classification (CPC):
**G01M 3/38; G01M 3/04; G02B 5/04;
H01M 10/4228; H05B 3/84**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.09.2024 IN 202411071793**

(71) Applicant: **Honeywell International Inc.
Charlotte, NC 28202 (US)**

(72) Inventors:
• **TRIPATHY, Janmejaya
Charlotte, 28202 (US)**
• **KUMAR, Nirmal
Charlotte, 28202 (US)**

(74) Representative: **Haseltine Lake Kempner LLP
Cheapside House
138 Cheapside
London EC2V 6BJ (GB)**

(54) **OPTICAL SENSOR**

(57)     Various embodiments of optical sensors such as optical leak sensors are provided. Example embodiments of the optical sensors described herein may include an optical prism comprising a plurality of substantially semicylindrical grooves, a plurality of wires disposed within the plurality of substantially semicylindrical grooves (wherein the plurality of wires is configured to provide heat to the sensing surface of the optical prism in response to application of power), and/or a microcontroller configured to provide the power to the plurality of wires.

FIG. 2

**Description**

FIELD OF THE INVENTION

Embodiments of the present disclosure generally relate to optical sensors, particularly to optical leak sensors.

BACKGROUND

In some examples, electric vehicles rely on liquid coolants. Liquid coolants may, in some examples, leak onto components of an electric vehicle (e.g., a battery, a battery pack, etc.), resulting in undesirable outcomes such as short circuits and/or a fire starting. Leak sensors, such as optical leak sensors, are limited by various factors. For example, some leak sensors may produce false alarms, such as classifying condensation resulting from normal operation as a leak. Applicant has identified many technical challenges and difficulties associated with such optical sensors and methods for fabrication thereof. Through applied effort, ingenuity, and innovation, many of these identified problems have been solved by developing solutions that are included in embodiments of the present disclosure, many examples of which are described in detail herein.

BRIEF SUMMARY

Various example embodiments described herein relate to optical sensors.

In accordance with various embodiments of the present disclosure, an apparatus is provided. In some embodiments, the apparatus comprises: an optical prism comprising a heater element, wherein the heater element is comprised of at least one of the following: a substantially planar plate, wherein the substantially planar plate is configured to provide heat, in response to application of power, to a sensing surface of the optical prism; or a plurality of substantially cylindrical grooves, wherein a plurality of wires is disposed within the plurality of substantially semicylindrical grooves, and wherein the plurality of wires is configured to provide heat, in response to application of power, to a sensing surface of the optical prism; and a microcontroller configured to provide the power to the heater element..

In some embodiments, the optical prism is a triangular prism having an entry surface, an exit surface, and the sensing surface.

In some embodiments, the apparatus further comprises a beam source configured to provide a beam of light through the entry surface and towards the sensing surface; and a detector configured to receive light through the exit surface.

In some embodiments, the beam source is a light emitting diode (LED) and the detector is a photodetector.

In some embodiments, the beam source is an infrared (IR) transmitter and the detector is an IR receiver.

In some embodiments, the detector is configured to determine, based on receiving a reflection of the beam of light, that no fluid is present on the sensing surface of the optical prism.

In some embodiments, the plurality of wires is further configured to heat the sensing surface of the optical prism such that condensation or frozen particles on the sensing surface of the optical prism may be removed.

In accordance with various embodiments of the present disclosure, a system is provided. In some embodiments, the system comprises an optical prism comprising a heater element, wherein the heater element is comprised of at least one of the following: a substantially planar plate, wherein the substantially planar plate is configured to provide heat, in response to application of power to a sensing surface of the optical prism; or a plurality of substantially semicylindrical grooves, wherein a plurality of wires is disposed within the plurality of substantially cylindrical grooves, and wherein the plurality of wires is configured to provide heat, in response to application of power, to the sensing surface of the optical prism; a microcontroller configured to provide the power to the heater element; and a battery, wherein the optical prism, together with the heater element and the microcontroller, is configured to detect a leak to minimize damage to the battery..

In some embodiments, the optical prism is a triangular prism having an entry surface, an exit surface, and the sensing surface.

In some embodiments, the system further comprises a beam source configured to provide a beam of light through the entry surface and towards the sensing surface; and a detector configured to receive light through the exit surface.

In some embodiments, the beam source is a light emitting diode (LED) and the detector is a photodetector.

In some embodiments, the beam source is an infrared (IR) transmitter and the detector is an IR receiver.

In some embodiments, the detector is configured to determine, based on receiving a reflection of the beam of light, that no fluid is present on the sensing surface of the optical prism.

In some embodiments, the plurality of wires is further configured to heat the sensing surface of the optical prism such that condensation or frozen particles on the sensing surface of the optical prism may be removed.

In accordance with various embodiments of the present disclosure, a method is provided. In some embodiments, the method comprises: configuring an optical prism with a heater element, wherein the heater element is further configured to comprise at least one of the following: a substantially planar plate; or a plurality of semicylindrical grooves, wherein a plurality of wires is disposed within the plurality of substantially semicylindrical grooves; providing, by a microcontroller, power to the heater element; and providing, by the heater element and in response to application of power, heat to a sensing surface of the optical prism.

In some embodiments, the optical prism is a triangular prism having an entry surface, an exit surface, and the sensing surface.

In some embodiments, the method further comprises: providing, by a beam source, a beam of light through the entry surface and towards the sensing surface; and receiving, by a detector, light through the exit surface.

In some embodiments, the beam source is at least one of a light emitting diode (LED) or an infrared (IR) transmitter, and wherein the detector is at least one of a photodetector or an IR receiver.

In some embodiments, the method further comprises determining, by the detector and based on receiving a reflection of the beam of light, that no fluid is present on the sensing surface of the optical prism.

In some embodiments, the heating the sensing surface of the optical prism further comprises heating the sensing surface of the optical prism such that condensation or frozen particles on the sensing surface of the optical prism may be removed.

BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 is a cross-sectional view of an exemplary optical sensor;
FIG. 2 is a cross-sectional view of an exemplary optical sensor;
FIG. 3 is a cross-sectional view of an exemplary optical sensor;
FIG. 4 is a top-down view of an exemplary optical sensor; and
FIG. 5 is a flowchart illustrating an exemplary method for operating an optical sensor, in accordance with some embodiments of the present disclosure.

DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "in fluid communication with" in the present disclosure refers to two or more elements or components being connected through one or more paths or pathways, such that a fluid or other flowing media may be input to and/or output from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

The term "sensor" refers to a component that may detect, measure, and/or identify any one or more attributes or characteristics of an environment or media, including but not limited to presence and/or amount of a medium (e.g., a fluid).

In some examples, electric vehicles rely on liquid coolants. Liquid coolants may, in some examples, leak onto components of an electric vehicle (e.g., a battery, a battery pack, etc.), resulting in outcomes such as short circuits and/or a fire starting.

Embodiments of the present disclosure, in some examples, provide leak sensors, for example, such as optical leak sensors. Optical leak sensors of the present disclosure may be configured to detect leaks comprising water droplets as small as approximately 0.5 mm in height (e.g., approximately 0.5 mm or greater). Optical leak sensors of the present disclosure may be configured to detect a severity of a leak, for example, by detecting a level (e.g., height, diameter, amount, etc.) of one or more moisture droplets of the leak.

In some examples, leak sensors are limited by various factors. For example, some leak sensors may produce false alarms, such as classifying condensation droplets resulting from normal operation as a leak. Embodiments of the present disclosure, in some examples, provide optical leak sensors which address or otherwise reduce false alarms arising from condensation, frozen droplets, and/or the like.

Example embodiments of the present disclosure may provide an optical sensor. The optical sensor may be a component in a device and/or system, such as an electric vehicle. The optical sensor may be configured to detect leaks in the device and/or system. The optical sensor may be configured to detect leaks in the device and/or system based on changes in various environmental parameters (e.g., temperature, etc.). The optical sensor may be ingress protection (IP) grade, for example, having electronic components configured to withstand exposure to moisture and/or other materials.

In an example, an optical sensor includes a light source, a prism having an optical plate, and a detector. In this example, the prism has an entry surface, an exit surface, and a sensing surface. In this example, the prism is configured with a heater element. The heater element may be embedded within the prism, for example, such that the heater element is not exposed to moisture. The heater element may be comprised of one or more plates (e.g., a substantially planar plate, a plate of other geometries, and/or the like) configured to provide heat to the sensing surface of the prism. Additionally, or alternatively, the heater element may be comprised of one or more wires (e.g., a series of substantially parallel wires) embedded proximate to the sensing surface of the prism. In this example, current is run through the wires, which are thereby configured to provide heat to the sensing surface of the prism. In this example, the light source transmits a beam of light through the entry surface of the prism. In this example, the prism has a refractive index of 1.5, air surrounding at least the sensing surface of the prism has a refractive index of 1.0, and water has a refractive index of approximately 1.3. In this example, as the beam of light travels through the prism, it may reach the sensing surface. Depending on various factors such as presence of moisture on the sensing surface (e.g., due to condensation arising from normal operation of the electric vehicle, due to a coolant leak, etc.), the light may either at least partially exit via the sensing surface (e.g., if at least some moisture is present) or at substantially completely travel out of the exit surface and to the detector (e.g., if no moisture is present). If moisture is detected, the optical sensor may be configured to run current through the wires such that moisture causing a false alarm (e.g., condensation droplets, frozen droplets, etc.) may evaporate and/or melt away, leaving a clear sensing surface. If moisture is still detected after the wires heat the sensing surface, then the optical sensor (e.g., via the detector) may determine that a leak is present. Based on detecting a leak, the optical sensor may send a message indicating the presence of the leak and/or otherwise raise an alarm. Based on not detecting a leak, the optical sensor may send a message indicating that there is no leak and/or otherwise indicate that the device and/or system is operating without issue.

As described herein, embodiments of the present disclosure, in some examples, provide methods, devices, and/or systems comprising optical sensors, optical leak sensors, and/or the like.

To address challenges and limitations associated with optical sensors and methods for fabrication thereof, various examples of the present disclosure may be provided. For example, various examples of the present disclosure may provide example devices, systems, and/or methods for optical sensors, optical leak sensors, and/or the like.

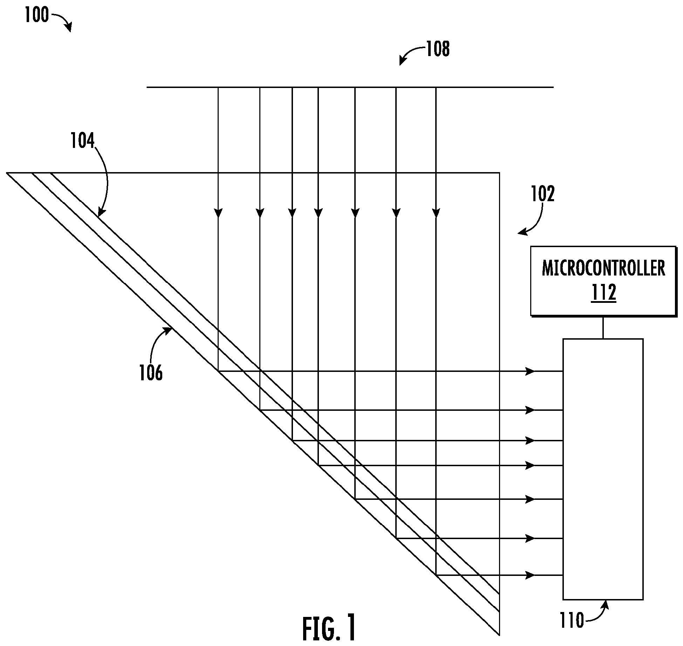

Referring now to FIG. 1, a cross-sectional view of an exemplary optical sensor 100 is provided. The optical sensor 100 may be an optical leak sensor and/or the like. The optical sensor 100 comprises a prism 102, a heater element comprised of a substantially planar plate 104, an optical plate 106, a light source 108, a detector 110, and a microcontroller 112. Although the example of FIG. 1 shows one prism, one substantially planar plate, one optical plate, one light source, one detector, and one microcontroller, the disclosed optical sensor is not so limited as any number of such components may be present in an optical sensor, in some embodiments.

The prism 102 may be a triangular prism, another type of prism (e.g., a rectangular prism, etc.), and/or other type of optical element. The prism 102 may be a right-angle triangular prism, wherein the prism has two sides which make a right angle and a third side which acts as their hypotenuse. The prism 102 may comprise at least one entry surface, at least one exit surface, and/or at least one sensing surface. In some examples, the prism 102 is comprised of glass (e.g., optical-grade glass) and/or other materials. The prism 102 may have a refractive index of approximately 1.5. In some examples, the prism 102 is at least partially surrounded by air (wherein air has a refractive index of 1.0). For example, the prism 102 may be coupled to one or more components of an electric vehicle, and the at least one sensing surface of the prism 102 may be exposed to the air.

A heating element of the optical sensor 100 may be comprised of the substantially planar plate 104 and/or of any other types of heating elements (e.g., plates of other geometries, wires, and/or the like). In the example of FIG. 1, one substantially planar plate is shown, however, there may be any number of substantially planar plates and/or other heating elements. The substantially planar plate 104 may be embedded within the prism 102. For example, the substantially planar plate 104 may be positioned proximate to the at least one sensing surface such that is provides heat to the at least one sensing surface. For example, the substantially planar plate 104 may be configured to provide heat to the at least one sensing surface such that condensation, frozen droplets, and/or other objects may be prevented from remaining on the at least one sensing surface. The substantially planar plate 104 may transport a current of electricity, generating heat. In some examples, the substantially planar plate 104 is configured such that the substantially planar plate 104 is substantially parallel to the optical plate 106.

The optical plate 106 may be comprised of glass (e.g., optical-grade glass) and/or other materials. The optical plate 106 and the prism 102 may be a single entity. In some examples, the optical plate 106 may have a different refractive index than the prism 102. For example, the refractive index difference between the optical plate 106 and the prism 102 may be determined based on the critical angle of the light beam transmitted through both the optical plate 106 and the prism 102. Total internal reflection may occur at a sensing surface (e.g., an "outer" surface) of the optical plate 106 while there is an absence of moisture.

The critical angle is given by:

$$\theta_C = Sin^{-1}\frac{n_2}{n_1},$$

where $\theta_C$ is the critical angle, $n_1$ is a refractive index of a first medium (e.g., the optical plate 106), and $n_2$ is a refractive index of a second medium (e.g., the prism 102). Based on this equation, the critical angle between the prism 102 and the optical plate 106 may be greater than the incident angle at the interface between the prism 102 and the optical plate 106. The critical angle between the optical plate 106 and a leaked liquid (e.g., moisture) may be less than the incident angle at the interface between optical plate 106 and air.

The light source 108 may be a light emitting diode (LED), a visible or an infrared (IR) transmitter, and/or another type of light source. The detector 110 may be a photodetector, an IR receiver, and/or another type of detector. The light source 108 may transmit a beam of light through one or more components of the optical sensor (e.g., the prism 102, the optical plate 106, etc.) and to the detector 110. In some examples, the detector 110 is configured to receive at least a portion of the light transmitted by the light source 108 and determine an amount of the received light. The detector 110 may be configured such that IR radiation generated by the heater element may not impact measurements taken by the detector 110 (e.g., the IR radiation generated by the heater element may not result in noise impacting measurements taken by the detector 110).

The microcontroller 112 may be configured to activate providing power to the substantially planar plate 104. The microcontroller may determine, based on the detector 110 detecting moisture on the sensing surface of the prism 102, to heat the sensing surface of the prism 102 such that any condensation, frozen droplets, and/or other moisture arising from normal operation may be evaporated and/or melted away, leaving the sensing surface clear to detect leaks. In some examples, the power activated to be provided by the microcontroller 112 is modulated with or without amplitude variation.

In an example, an optical sensor includes a light source (e.g., such as the light source 108), a prism (e.g., such as the prism 102) having an optical plate (e.g., such as the optical plate 106), and a detector (e.g., such as the detector 110). In this example, the prism has an entry surface, an exit surface, and a sensing surface. Further, the prism is configured with a heater element comprised of a substantially planar plate (e.g., such as the substantially planar plate 104). In instances in which current is run through the substantially planar plate, heat is provided to the sensing surface of the prism. In this example, the light source transmits a beam of light (e.g., such as the arrows leaving the light source 108 in FIG. 1) through an entry surface of the prism.

In this example, the prism has a refractive index of 1.5, and the air surrounding at least the sensing surface of the prism has a refractive index of 1.0. In this example, as the beam of light travels through the prism, it may reach the sensing surface. Depending on various factors such as presence of moisture on the sensing surface (e.g., due to condensation from normal operation, due to a leak, etc.), the light may either at least partially exit via the sensing surface (e.g., if at least some moisture is present) or at substantially completely travel out of the exit surface and to the detector (e.g., if no moisture is present).

In a first example of the device and/or system in operation, the sensing surface is free of moisture. In the first example, based on the refractive index of air and the refractive index of the prism, total internal reflection may occur, and substantially all of a beam of light transmitted by the light source through the entry surface may reflect internally off the sensing surface and travel to the detector via the exit surface. As a result, the detector may determine that no moisture is present on the surface of the prism.

In a second example, the sensing surface is in contact with a liquid arising from a leak. In the second example, the refractive index of the liquid is greater than 1.0 (e.g., the refractive index of water is approximately 1.3). In this second example and based on the refractive index of the liquid and the refractive index of the prism, at least a portion of a beam of light transmitted by the light source through the entry surface may exit via the exit surface of the prism (e.g., thus not reaching the detector). In the second example, the sensing surface may be free of condensation and/or frozen droplets due to the heat provided by the wires to the sensing surface, and thus the detector may accurately determine that moisture present on the sensing surface is due to a leak.

In a third example, the sensing surface is in contact with liquid arising from condensation due to normal operation (i.e., not a leak). In third example, the refractive index of the liquid is greater than 1.0 (e.g., the refractive index of water is approximately 1.3). In the third example, based on the refractive index of the liquid and the refractive index of the prism, at least a portion of a beam of light transmitted by the light source may exit the via the exit surface of the prism (e.g., thus at least the portion of the beam of light may not reach the detector). In the third example, based on at least a portion of the beam of light not reaching the detector, the detector may determine that there is moisture present on the sensing surface. In the third example, the substantially planar plate may be then configured to provide heat to the sensing surface. In the third example, the condensation may evaporate off the sensing surface, leaving it free of moisture. In the third example, the light source may once again transmit a beam of light through the entry surface and towards the sensing surface, where total internal reflection may occur (e.g., substantially all of the beam of light may be reflected off the internal side of the sensing surface and travel to the detector via the exit surface). In the third example, the detector may thus determine that no moisture is present and that the moisture initially detected was due to condensation during normal operation.

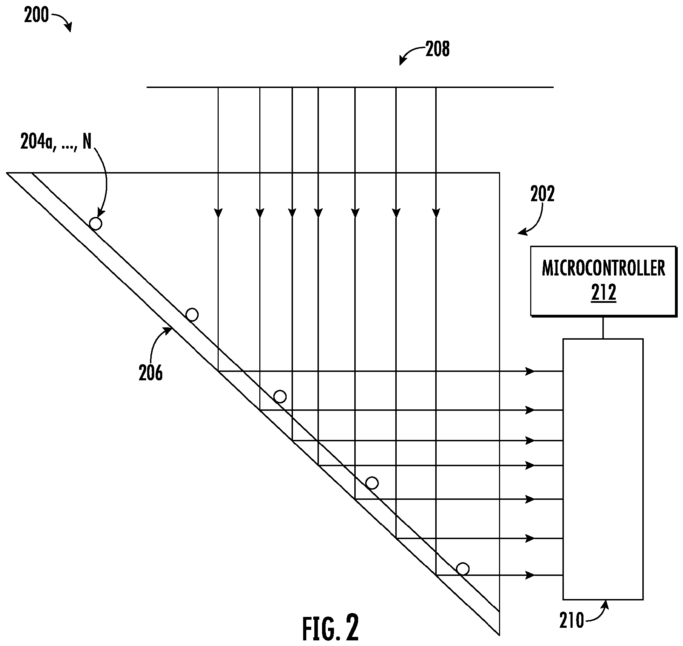

Referring now to FIG. 2, a cross-sectional view of an exemplary optical sensor 200 is provided. The optical sensor 200 may be an optical leak sensor and/or the like. The optical sensor 200 comprises a prism 202, a heater element comprised of a plurality of wires 204a,...,N, an optical plate 206, a light source 208, a detector 210, and a microcontroller 212. Although the example of FIG. 2 shows one prism, a plurality of heating elements, one optical plate, one light source, one detector, and one microcontroller, the disclosed optical sensor is not so limited as any number of such components may be present in an optical sensor, in some embodiments.

The prism 202 may be a triangular prism, another type of prism (e.g., a rectangular prism, etc.), and/or other type of optical element. The prism 202 may be a right-angle triangular prism, wherein the prism has two sides which make a right angle and a third side which acts as their hypotenuse. The prism 202 may comprise at least one entry surface, at least one exit surface, and/or at least one sensing surface. In some examples, the prism 202 is comprised of glass (e.g., optical-grade glass) and/or other materials. The prism 202 may have a refractive index of approximately 1.5. In some examples, the prism 202 is at least partially surrounded by air (wherein air has a refractive index of 1.0). For example, the prism 202 may be coupled to one or more components of an electric vehicle, and the at least one sensing surface of the prism 202 may be exposed to the air.

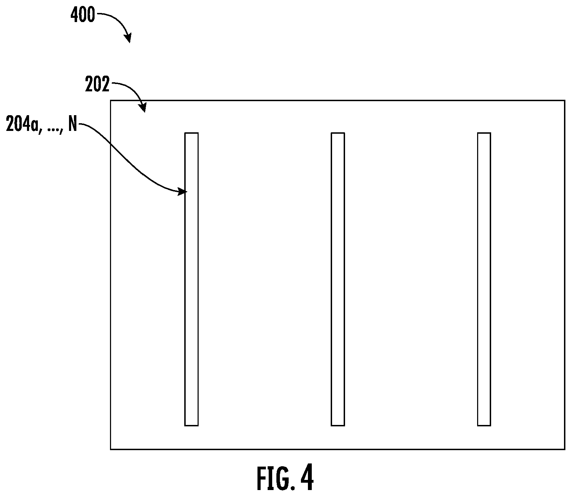

The plurality of wires 204a,...,N may be comprised of a plurality of wires. In the example of FIG. 2, the wires 204a, 204b, 204c, 204d, and 204e (collectively "204") are shown, however, there may be any number of heating elements. The plurality of wires 204 may be embedded within the prism 202. For example, the plurality of wires 204 may be positioned proximate to the at least one sensing surface such that they provide heat to the at least one sensing surface. For example, the plurality of wires 204 may be configured to provide heat to the at least one sensing surface such that condensation, frozen droplets, and/or other objects may be prevented from remaining on the at least one sensing surface. In some examples, the plurality of wires 204 are disposed within engraved cavities proximate to the at least one sensing surface of the prism 202. In some examples, the plurality of wires 204 are disposed 1 mm - 10 mm below the at least one sensing surface of the prism 202 (e.g., preferably 2 mm - 5 mm below the at least one sensing surface of the prism 202). The plurality of wires 204 may transport a current of electricity, generating heat. In some examples, the plurality of wires 204 are configured such that the heating elements are parallel to one another (shown in FIG. 4). In some examples, the plurality of wires 204 may be configured such that the heating elements are variously arranged (e.g., arranged perpendicular to one another, arranged perpendicular to some and parallel to others, arranged in curves and/or loops, and/or the like).

The optical plate 206 may be comprised of glass (e.g., optical-grade glass) and/or other materials. The optical plate 206 and the prism 202 may be a single entity. In some examples, the optical plate 206 may have a different refractive index than the prism 202. For example, the refractive index difference between the optical plate 206 and the prism 202 may be determined based on the critical angle of the light beam transmitted through both the optical plate 206 and the prism 202. Total internal reflection may occur at a sensing surface (e.g., an "outer" surface) of the optical plate 206 while there is an absence of moisture.

The critical angle is given by:

$$\theta_C = Sin^{-1}\frac{n_2}{n_1},$$

where $\theta_C$ is the critical angle, $n_1$ is a refractive index of a first medium (e.g., the optical plate 206), and $n_2$ is a refractive index of a second medium (e.g., the prism 202). Based on this equation, the critical angle between the prism 202 and the optical plate 206 may be greater than the incident angle at the interface between the prism 202 and the optical plate 206. The critical angle between the optical plate 206 and a leaked liquid (e.g., moisture) may be less than the incident angle at the interface between optical plate 206 and air.

The light source 208 may be a light emitting diode (LED), a visible or an infrared (IR) transmitter, and/or another type of light source. The detector 210 may be a photodetector, an IR receiver, and/or another type of detector. The light source 208 may transmit a beam of light through one or more components of the optical sensor (e.g., the prism 202, the optical plate 206, etc.) and to the detector 210. In some examples, the detector 210 is configured to receive at least a portion of the light transmitted by the light source 208 and determine an amount of the received light. The detector 210 may be configured such that IR radiation generated by the heater element may not impact measurements taken by the detector 210 (e.g., the IR radiation generated by the heater element may not result in noise impacting measurements taken by the detector 210).

The microcontroller 212 may be configured to activate providing power to the plurality of wires 204. The microcontroller may determine, based on the detector 210 detecting moisture on the sensing surface of the prism 202, to heat the sensing surface of the prism 202 such that any condensation, frozen droplets, and/or other moisture arising from normal operation may be evaporated and/or melted away, leaving the sensing surface clear to detect leaks. In some examples, the power activated to be provided by the microcontroller 212 is modulated with or without amplitude variation.

In an example, an optical sensor includes a light source (e.g., such as the light source 208), a prism (e.g., such as the prism 202) having an optical plate (e.g., such as the optical plate 206), and a detector (e.g., such as the detector 210). In this example, the prism has an entry surface, an exit surface, and a sensing surface. Further, the prism is configured with a series of parallel wires embedded proximate to a sensing surface of the prism (e.g., such as the plurality of wires 204). In instances in which current is run through the wires, heat is provided to the sensing surface of the prism. In this example, the light source transmits a beam of light (e.g., such as the arrows leaving the light source 208 in FIG. 1) through an entry surface of the prism.

In this example, the prism has a refractive index of 1.5, and the air surrounding at least the sensing surface of the prism has a refractive index of 1.0. In this example, as the beam of light travels through the prism, it may reach the sensing surface. Depending on various factors such as presence of moisture on the sensing surface (e.g., due to condensation from normal operation, due to a leak, etc.), the light may either at least partially exit via the sensing surface (e.g., if at least some moisture is present) or at substantially completely travel out of the exit surface and to the detector (e.g., if no moisture is present).

In a first example of the device and/or system in operation, the sensing surface is free of moisture. In the first example, based on the refractive index of air and the refractive index of the prism, total internal reflection may occur, and substantially all of a beam of light transmitted by the light source through the entry surface may reflect internally off the sensing surface and travel to the detector via the exit surface. As a result, the detector may determine that no moisture is present on the surface of the prism.

In a second example, the sensing surface is in contact with a liquid arising from a leak. In the second example, the refractive index of the liquid is greater than 1.0 (e.g., the refractive index of water is approximately 1.3). In this second example and based on the refractive index of the liquid and the refractive index of the prism, at least a portion of a beam of light transmitted by the light source through the entry surface may exit via the exit surface of the prism (e.g., thus not reaching the detector). In the second example, the sensing surface may be free of condensation and/or frozen droplets due to the heat provided by the wires to the sensing surface, and thus the detector may accurately determine that moisture present on the sensing surface is due to a leak.

In a third example, the sensing surface is in contact with liquid arising from condensation due to normal operation (i.e., not a leak). In third example, the refractive index of the liquid is greater than 1.0 (e.g., the refractive index of water is approximately 1.3). In the third example, based on the refractive index of the liquid and the refractive index of the prism, at least a portion of a beam of light transmitted by the light source may exit the via the exit surface of the prism (e.g., thus at least the portion of the beam of light may not reach the detector). In the third example, based on based on at least a portion of the beam of light not reaching the detector, the detector may determine that there is moisture present on the sensing surface. In the third example, the wires may be then configured to provide heat to the sensing surface. In the third example, the condensation may evaporate off the sensing surface, leaving it free of moisture. In the third example, the light source may once again transmit a beam of light through the entry surface and towards the sensing surface, where total internal reflection may occur (e.g., substantially all of the beam of light may be reflected off the internal side of the sensing surface and travel to the detector via the exit surface). In the third example, the detector may thus determine that no moisture is present and that the moisture initially detected was due to condensation during normal operation.

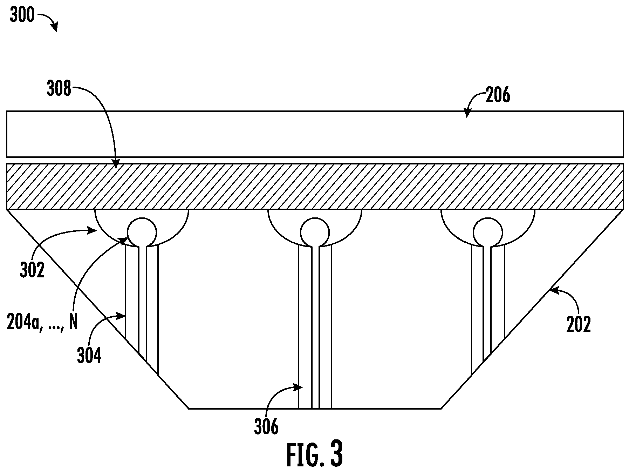

Referring now to FIG. 3, a cross-sectional view of an exemplary optical sensor 300 is provided. The optical sensor 300 may be the optical sensor 200. The optical sensor 300 may be an optical leak sensor and/or the like. The optical sensor 300 comprises the prism 202, the plurality of wires 204a,...,N, the optical plate 206, a plurality of grooves 302, a plurality of through-holes 304, a plurality of heating wires 306, and optical glue 308. Although the example of FIG. 3 shows one prism, one plurality of three heating elements, one optical plate, one plurality of three groovers, one plurality of three through-holes, one plurality of three heating wires, and one amount of optical glue, any number of such components may be present in an optical sensor.

The prism 202 may be a triangular prism and/or another type of prism (e.g., a rectangular prism, etc.). The prism 202 may be a right-angle triangular prism, wherein the prism has two sides which make a right angle and a third side which acts as their hypotenuse. The prism 202 may comprise at least one entry surface, at least one exit surface, and/or at least one sensing surface. In some examples, the prism 202 is comprised of glass (e.g., optical-grade glass) and/or other materials. The prism 202 may have a refractive index of approximately 1.5. In some examples, the prism 202 is at least partially surrounded by air (wherein air has a refractive index of 1.0). For example, the prism 202 may be coupled to one or more components of an electric vehicle, and the at least one sensing surface of the prism 202 may be exposed to the air.

The plurality of wires 204a,...,N may be comprised of a plurality of wires. In the example of FIG. 3, wires 204a, 204b, and 204c (collectively "204") are shown, however, there may be any number of heating elements. The plurality of wires 204 may be embedded within the prism 202. For example, the plurality of wires 204 may be positioned proximate to the at least one sensing surface such that they may provide heat to the at least one sensing surface. For example, the plurality of wires 204 may be configured to provide heat to the at least one sensing surface such that condensation, frozen droplets, and/or other objects may be prevented from remaining on the at least one sensing surface. In some examples, the plurality of wires 204 are disposed within engraved cavities (e.g., the plurality of grooves 302) proximate to the at least one sensing surface of the prism 202. In some examples, the plurality of wires 204 are disposed 1 mm - 10 mm below the at least one sensing surface of the prism 202 (e.g., preferably 2 mm - 5 mm below the at least one sensing surface of the prism 202). The plurality of wires 204 transport a current of electricity, generating heat. In some examples, the plurality of wires 204 are configured such that the heating elements are parallel to one another (shown in FIG. 4). In some examples, the plurality of wires 204 may be configured such that the heating elements are variously arranged (e.g., arranged perpendicular to one another, arranged perpendicular to some and parallel to others, arranged in curves and/or loops, and/or the like).

The optical plate 206 may be comprised of glass (e.g., optical-grade glass) and/or other materials. The optical plate 206 and the prism 202 may be a single entity. In some examples, the optical plate 206 may have a different refractive index than the prism 202. For example, the refractive index difference between the optical plate 206 and the prism 202 may be determined based on the critical angle of the light beam transmitted through both the optical plate 206 and the prism 202. Total internal reflection may occur at a sensing surface (e.g., an "outer" surface) of the optical plate 206 while there is an absence of moisture.
The critical angle is given by:

$$\theta_C = Sin^{-1}\frac{n_2}{n_1},$$

where $\theta_C$ is the critical angle, $n_1$ is a refractive index of a first medium (e.g., the optical plate 206), and $n_2$ is a refractive index of a second medium (e.g., the prism 202). Based on this equation, the critical angle between the prism 202 and the optical plate 206 may be greater than the incident angle at the interface between the prism 202 and the optical plate 206. The critical angle between the optical plate 206 and a leaked liquid (e.g., moisture) may be less than the incident angle at the interface between optical plate 206 and air.

The sensing surface of the prism 202 may be configured with the plurality of grooves 302. The number of grooves 302 may correspond to the number of wires 204. The plurality of grooves 302 may be etched into the sensing surface of the prism 202. In some examples, the plurality of grooves 302 are configured to contain the wires 204. In some examples, the plurality of grooves 302 are comprised of substantially semicylindrical grooves. In some examples, the plurality of grooves 302 are comprised of substantially cylindrical grooves, substantially square grooves, substantially rectangular grooves, substantially triangular grooves, and/or other shapes of grooves.

The prism 202 may be further configured with the through-holes 304. The through-holes 304 may be cavities etched into the prism 202 configured to contain the heating wires 306 such that the heating wires connect to the wires 204 in the grooves 302. The through-holes 304 may be at an angle to the grooves 302. For example, the through-holes 304 may be configured substantially perpendicularly to grooves 302. In some examples, the through-holes may be irregularly shaped such that they comprise curves, loops, turns, corners, and/or the like. The heating wires 306 may be configured to provide current to the wires 204. The heating wires 306 may be configured to turn on based on the detector determining that moisture is present on the sensing surface of the prism 202.

The optical glue 308 may be an adhesive and/or other material. The optical glue 308 may be applied to the sensing surface of the prism 202 such that the optical plate 206 is coupled to the prism 202 via the optical glue 308. The optical glue 308 may be further configured to confine the wires 204 to the grooves 302. In some examples, the optical glue 308 may be optically thin, allowing for substantially all of incident light to be transmitted therethrough. Advantages of the optical plate 206 being coupled to the sensing surface of the prism 202 may include preventing sparks and/or fire which may result from fluids coming into direct contact with the plurality of wires 204.

Referring now to FIG. 4, a top-down view of an exemplary optical sensor is provided.

The optical sensor 400 may be the optical sensor 200 and/or the optical sensor 300. The optical sensor 400 may be an optical leak sensor and/or the like. The optical sensor 400 comprises the prism 202 and the plurality of wires 204a,...,N. Although the example of FIG. 4 shows one prism and one plurality of three wires and/or heating elements, any number of such components may be present in an optical sensor.

The prism 202 may be a triangular prism and/or another type of prism (e.g., a rectangular prism, etc.). The prism 202 may be a right-angle triangular prism, wherein the prism has two sides which make a right angle and a third side which acts as their hypotenuse. The prism 202 may comprise at least one entry surface, at least one exit surface, and/or at least one sensing surface. In some examples, the prism 202 is comprised of glass (e.g., optical-grade glass) and/or other materials. The prism 202 may have a refractive index of approximately 1.5. In some examples, the prism 202 is at least partially surrounded by air (wherein air has a refractive index of 1.0). For example, the prism 202 may be coupled to one or more components of an electric vehicle, and the at least one sensing surface of the prism 202 may be exposed to the air.

The plurality of wires 204a,...,N may be comprised of a plurality of wires. In the example of FIG. 4, wires 204a, 204b, and 204c (collectively "204") are shown, however, there may be any number of heating elements. The plurality of wires 204 may be embedded within the prism 202. For example, the plurality of wires 204 may be positioned proximate to the at least one sensing surface such that they may provide heat to the at least one sensing surface. For example, the plurality of wires 204 may be configured to provide heat to the at least one sensing surface such that condensation, frozen droplets, and/or other objects may be prevented from remaining on the at least one sensing surface. In some examples, the plurality of wires 204 are disposed within engraved cavities (e.g., the plurality of grooves 302) proximate to the at least one sensing surface of the prism 202. In some examples, the plurality of wires 204 are disposed 1 mm - 10 mm below the at least one sensing surface of the prism 202 (e.g., preferably 2 mm - 5 mm below the at least one sensing surface of the prism 202). The plurality of wires 204 may transport a current of electricity, generating heat.

In the example of FIG. 4, a head-on view of the sensing surface of the optical sensor 400 is provided. In the view of the optical sensor4, the plurality of wires 204 are substantially parallel to one another. In some examples, the plurality of wires 204 may be configured such that the heating elements are variously arranged (e.g., arranged perpendicular to one another, arranged perpendicular to some and parallel to others, arranged in curves and/or loops, and/or the like).

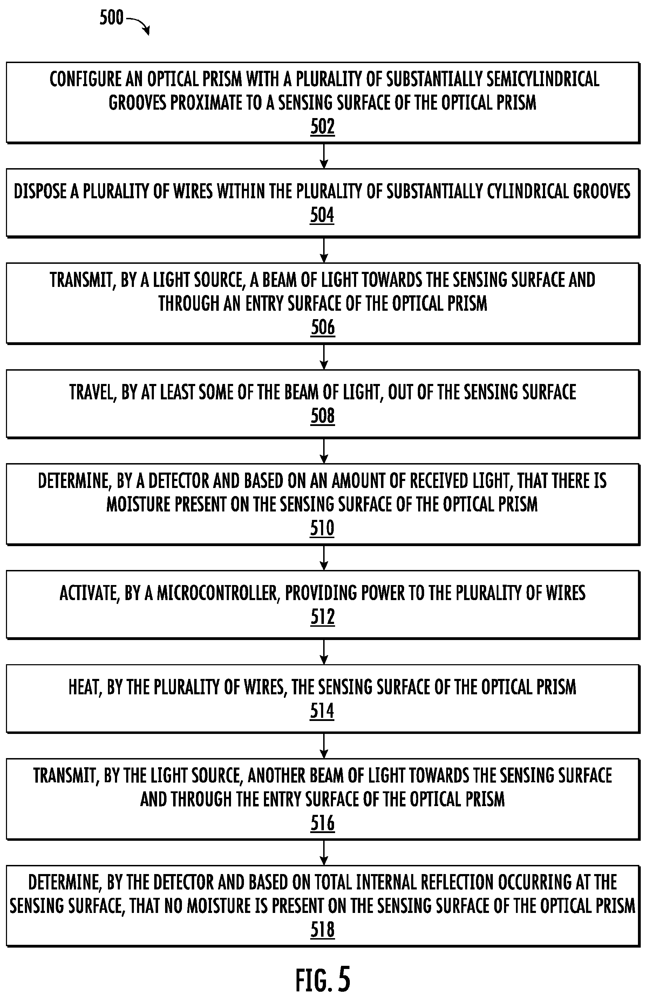

Referring now to FIG. 5, a flowchart illustrating an exemplary method 500 for operating an optical sensor is provided.

At step/operation 502, an optical prism (e.g., such as the prism 202) may be configured with a plurality of substantially semicylindrical grooves (e.g., such as the grooves 302) proximate to a sensing surface of the optical prism. The plurality of substantially semicylindrical grooves may be etched into the sensing surface of the optical prism.

At step/operation 504, a plurality of wires (e.g., the plurality of wires 204) may be disposed within the plurality of substantially semicylindrical grooves.

At step/operation 506, a light source (e.g., the light source 208) may transmit a beam of light towards the sensing surface and through an entry surface of the optical prism.

At step/operation 508, at least some of the beam of light may travel out of the sensing surface. For example, due to the refractive index of the optical prism and the refractive index of moisture present on the sensing surface (e.g., air has a refractive index of 1.0, the optical prism may have a refractive index of 1.5, and the liquid on the sensing surface may have a refractive index of 1.3 or any other value), at least some of the beam of light may be transmitted out of the optical prism through the sensing surface.

At step/operation 510, a detector (e.g., the detector 210) may determine, based on an amount of received light, whether there is moisture present on the sensing surface of the optical prism. At least a remaining portion of the beam of light (up to and/or including none of the beam of light) may reach the detector. The detector may determine, based on the amount of received light that there is moisture on the sensing surface of the optical prism.

At step/operation 512, a microcontroller (e.g., the microcontroller 212) may activate providing power to the plurality of wires. For example, the microcontroller may indicate to a plurality of heating wires (e.g., the heating wires 306) to provide current to the heating elements. In some examples, the power activated to be provided by the microcontroller is modulated with or without amplitude variation.

At step/operation 514, the plurality of wires may heat the sensing surface of the optical prism. For example, the heating elements may provide heat to the sensing surface of the prism. In some examples, the heat may cause moisture due to condensation, frozen droplets, and/or the like to evaporate and/or melt away, leaving the sensing surface clear (i.e., ready to come into contact with moisture from leaks). Thus, heating the sensing surface may prevent false alarms and/or false indications of moisture.

At step/operation 516, the light source may transmit another beam of light towards the sensing surface and through the entry surface of the optical prism.

At step/operation 518, the detector may determine, based on total internal reflection occurring at the sensing surface, that no moisture is present on the sensing surface of the optical prism.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

**Claims**

1.  An apparatus comprising:

    an optical prism comprising a heater element, wherein the heater element is comprised of at least one of the following:

       a substantially planar plate, wherein the substantially planar plate is configured to provide heat, in response to application of power, to a sensing surface of the optical prism; or
       a plurality of substantially semicylindrical grooves, wherein a plurality of wires is disposed within the plurality of substantially semicylindrical grooves, and wherein the plurality of wires is configured to provide heat, in response to application of power, to the sensing surface of the optical prism; and

    a microcontroller configured to provide the power to the heater element.

2.  The apparatus of claim 1, wherein the optical prism is a triangular prism having an entry surface, an exit surface, and the sensing surface.

3.  The apparatus of any of claims 1 or 2, further comprising:

    a beam source configured to provide a beam of light through the entry surface and towards the sensing surface; and
    a detector configured to receive light through the exit surface.

4.  The apparatus of any of claims 1 to 3, wherein the beam source is a light emitting diode (LED) and the detector is a photodetector.

5.  The apparatus of any of claims 1 to 4, wherein the beam source is an infrared (IR) transmitter and the detector is an IR receiver.

6.  The apparatus of any of claims 1 to 5, wherein the detector is configured to determine, based on receiving a reflection of the beam of light, that no fluid is present on the sensing surface of the optical prism.

7.  The apparatus of any of claims 1 to 6, wherein the plurality of wires is further configured to heat the sensing surface of the optical prism such that condensation or frozen particles on the sensing surface of the optical prism may be removed.

8.  A system comprising:

    an optical prism comprising a heater element, wherein the heater element is comprised of at least one of the following:

       a substantially planar plate, wherein the substantially planar plate is configured to provide heat, in response to application of power, to a sensing surface of the optical prism; or
       a plurality of substantially semicylindrical grooves, wherein a plurality of wires is disposed within the plurality of substantially semicylindrical grooves, and wherein the plurality of wires is configured to provide heat, in response to application of power, to the sensing surface of the optical prism;

    a microcontroller configured to provide the power to the heater element; and
    a battery, wherein the optical prism, together with the heater element and the microcontroller, is configured to detect a leak to minimize damage to the battery.

9.  The system of claim 8, wherein the optical prism is a triangular prism having an entry surface, an exit surface, and the sensing surface.

**10.** The system of any of claims 8 or 9, further comprising:

a beam source configured to provide a beam of light through the entry surface and towards the sensing surface; and
a detector configured to receive light through the exit surface.

**11.** The system of claim any of claims 8 to 10, wherein the beam source is a light emitting diode (LED) and the detector is a photodetector.

**12.** The system of any of claims 8 to 11, wherein the beam source is an infrared (IR) transmitter and the detector is an IR receiver.

**13.** The system of any of claims 8 to 12, wherein the detector is configured to determine, based on receiving a reflection of the beam of light, that no fluid is present on the sensing surface of the optical prism.

**14.** The system of any of claims 8 to 13, wherein the plurality of wires is further configured to heat the sensing surface of the optical prism such that condensation or frozen particles on the sensing surface of the optical prism may be removed.

**15.** A method comprising:

configuring an optical prism with a heater element, wherein the heater element is further configured to comprise at least one of the following:

a substantially planar plate; or
a plurality of substantially semicylindrical grooves, wherein a plurality of wires is disposed within the plurality of substantially semicylindrical grooves;

providing, by a microcontroller, power to the heater element;
providing, by the heater element and in response to application of power, heat to a sensing surface of the optical prism;
providing, by a beam source, a beam of light through the entry surface and towards the sensing surface; and
receiving, by a detector, light through the exit surface.

FIG. 1

FIG. 2

FIG. 3

400

202

204a, ..., N

FIG. 4

500 ⤸

CONFIGURE AN OPTICAL PRISM WITH A PLURALITY OF SUBSTANTIALLY SEMICYLINDRICAL GROOVES PROXIMATE TO A SENSING SURFACE OF THE OPTICAL PRISM
502

DISPOSE A PLURALITY OF WIRES WITHIN THE PLURALITY OF SUBSTANTIALLY CYLINDRICAL GROOVES
504

TRANSMIT, BY A LIGHT SOURCE, A BEAM OF LIGHT TOWARDS THE SENSING SURFACE AND THROUGH AN ENTRY SURFACE OF THE OPTICAL PRISM
506

TRAVEL, BY AT LEAST SOME OF THE BEAM OF LIGHT, OUT OF THE SENSING SURFACE
508

DETERMINE, BY A DETECTOR AND BASED ON AN AMOUNT OF RECEIVED LIGHT, THAT THERE IS MOISTURE PRESENT ON THE SENSING SURFACE OF THE OPTICAL PRISM
510

ACTIVATE, BY A MICROCONTROLLER, PROVIDING POWER TO THE PLURALITY OF WIRES
512

HEAT, BY THE PLURALITY OF WIRES, THE SENSING SURFACE OF THE OPTICAL PRISM
514

TRANSMIT, BY THE LIGHT SOURCE, ANOTHER BEAM OF LIGHT TOWARDS THE SENSING SURFACE AND THROUGH THE ENTRY SURFACE OF THE OPTICAL PRISM
516

DETERMINE, BY THE DETECTOR AND BASED ON TOTAL INTERNAL REFLECTION OCCURRING AT THE SENSING SURFACE, THAT NO MOISTURE IS PRESENT ON THE SENSING SURFACE OF THE OPTICAL PRISM
518

FIG. 5

**EUROPEAN SEARCH REPORT**

Application Number

EP 25 20 0112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 101479 A (EAREKKUSU KK) 19 April 2007 (2007-04-19) | 1-6, 8-13,15 | INV. G01M3/04 |
| Y | * paragraph [0030]; figures 9,10,12 * | 1,7,14, 15 | G01M3/38 G02B5/04 H01M10/42 |
| Y | ----- EP 0 899 777 B1 (TOSHIBA CERAMICS CO [JP]) 29 September 2004 (2004-09-29) * paragraph [0277]; figure 20 * ----- | 1,7,14, 15 | H05B3/84 |

TECHNICAL FIELDS SEARCHED (IPC)

G01M
G02B
H01M
H05B

The present search report has been drawn up for all claims

| Place of search | Date of completion of the search | Examiner |
|---|---|---|
| The Hague | 3 February 2026 | Kaiser, Jean-Luc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 0112

This annex lists the patent family members relating to the patent documents cited in  the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| JP 2007101479 | A | 19-04-2007 | NONE | | |
| EP 0899777 | B1 | 29-09-2004 | DE | 69826594 T2 | 06-10-2005 |
| | | | EP | 0899777 A2 | 03-03-1999 |
| | | | KR | 19990014324 A | 25-02-1999 |
| | | | TW | 452826 B | 01-09-2001 |
| | | | US | 6043468 A | 28-03-2000 |

EPO FORM P0459

For more details about this annex : see Official Journal of the European Patent Office, No. 12/82